# EUROPEAN PATENT APPLICATION

(11) **EP 2 884 811 A1**
(43) Date of publication of application: **17.06.2015**
(21) Application number: 13827930.2
(22) Date of filing: 08.08.2013
(51) Int. Cl.: H04W 76/02

(54) **ESTABLISHMENT-PROCESSING METHOD, MANAGEMENT METHOD, AND DEVICE FOR X2 CONNECTION**

(30) Priority: 09.08.2012 CN 201210282245
(71) Applicant: ZTE Corporation, Shenzhen, Guangdong 518057 (CN)
(72) Inventor: HUANG, Ying, Shenzhen Guangdong 518057 (CN); GAO, Yin, Shenzhen Guangdong 518057 (CN); WU, Yunlu, Shenzhen Guangdong 518057 (CN)
(74) Representative: Bongiovanni, Simone
(86) International application number: PCT/CN2013/081057
(87) International publication number: WO 2014/023244

(57) **Abstract**

The present invention discloses a method and a device for processing and managing an establishment of an X2 connection. The method comprises: a home NodeB acquires the address of an adjacent NodeB corresponding to the home NodeB, wherein the address is for establishing an X2 connection between the home NodeB and the adjacent NodeB; and the home NodeB sends the acquired address to an X2 gateway. In the present invention, the technical problem in the related art that the X2 connection between the home NodeB and the adjacent NodeB cannot be established because the X2 gateway cannot acquire the address of the adjacent NodeB of the home NodeB is solved, thus implementing the establishment of the X2 connection between the home NodeB and the adjacent NodeB.

## Description

### Technical Field

The present invention relates to the communication field, and in particular to a method and a device for processing and managing an establishment of X2 connection.

### Background

Home NodeB is a small low-power NodeB, and is mainly used in small indoor places, such as home and office. The home NodeB may be connected to a core network of mobile network operator through a wired access device, such as the indoor cable, the Digital Subscriber Line (DSL) or the optical fibre, to provide access service based on wireless mobile communication network for specific users. It is an effective addition for the existing network deployment, and may improve the coverage of indoor voice and high-speed data service. It has many advantages, such as low cost, low power, simple access, plug and play, reduced postback, compatibility with existing terminals, and improved network coverage.

The Third Generation Partnership Projects (3GPP) Standard Organization defines home E-UTRAN NodeB (HeNB) in a Long Term Evolution (LTE) system. The function supported by the HeNB is substantially the same as evolved NodeB (eNB), and the process between the HeNB and the Evolved Packet Core (EPC) is substantially the same as the process between the eNB and the EPC. Since the HeNBs are generally deployed without the network planning of mobile network operator, they have small coverage and large numbers. For more convenient management and for supporting larger numbers of HeNBs, under the architecture of Evolved Universal Terrestrial Radio Access Network (Evolved UMTS, E-UTRAN), a new network element Home eNB Gateway (HeNB GW) may be introduced in an S1 connection between the HeNB and the EPC. The HeNB may be connected to a Mobility Management Entity (MME) through the HeNB GW as S1 proxy. In the LTE R10 the HeNBs only provides an X2 direct interface therebetween (i.e., an X2 interface established without through another node such as a proxy node) for use in load balancing, switching optimization, information interaction, etc., and the X2 interface is not supported between the Macro eNB and the home eNB (HeNB). However, in the LTE R11, a new functional entity X2 gateway (X2 GW) is introduced. The X2 GW, similar to the HeNB GW, is an optional deployment. A proxy X2 interface may be established between the eNB and the HeNB through the X2 GW, or a direct X2 interface may be established without through the X2 GW. After powered on, the HeNB may acquire the addresses of its X2 GW and HeNB GW through a Home E-UTRAN NodeB Management System (HeMS), and establish an S 1 connection and an X2 connection with them respectively. In the case of deploying the X2 GW, the HeNB will not directly initiate the X2 establishment procedure between the HeNB and an adjacent NodeB, and just establish an X2 connection with the X2 GW. After establishing the X2 connection between the X2 GW and the adjacent NodeB, it may be considered that a proxy X2 connection exists between the HeNB and the adjacent NodeB.

The HeNB may discover cells in the adjacent NodeB through the function of Automatic Neighbour Relation (ANR), and establish an X2 connection with the adjacent NodeB. Specifically, when a UE in a HeNB cell measures a stronger signal from an adjacent cell, the UE sends a measurement report to the HeNB, wherein the measurement report may comprises Physical Cell Identifier (PCI), EUTRAN Cell Global Identifier (ECGI), Tracking Area Code (TAC), Public Land Mobile Network ID (PLMN) list, etc. If the adjacent cell is a cell in the home NodeB, it may comprise Closed Subscriber Group (CSG) identifier (ID) and member state of the UE in the cell. After the HeNB acquires the ECGI (PLMN ID + cell ID) of the adjacent cell, detects whether it is a macro cell or a home NodeB cell through the information such as PCI or ECGI or CSG ID. If it is a macro cell, take the first 20 bits of the cell ID as its eNB ID; and if it is a home NodeB cell, take all 28 bits of the cell ID as its eNB ID. After the HeNB acquires the eNB ID and Tracking Area Identifier (TAI) (PLMN ID+TAC) of the adjacent NodeB, a transport network layer (TNL) address discovery procedure is initiated to acquire the transport network layer address for establishing an X2 connection. Since the TNL address discovery procedure is a procedure of interacting with an S1 interface, and the X2 GW and the HeNB GW are independent network elements and are not provided on a same network element, the TNL address discovery procedure is executed without through the X2 GW. Thus, the X2 GW neither acquires the TNL address of the adjacent NodeB, nor establishes the X2 connection with the adjacent NodeB, which results in that the HeNB cannot establish the X2 connection with the adjacent NodeB.

Aiming at the above problem in related art, no effective solution has been proposed at present.

### Summary

Aiming at the technical problem in related art that an X2 connection cannot be established between the home NodeB and the adjacent NodeB because the X2 gateway cannot acquire the address of the adjacent NodeB corresponding to the home NodeB, the embodiments of the present invention provide a method and a device for establishing and managing an X2 connection, so as to solve the above problem.

The method for processing an establishment of X2 connection according to an embodiment of the present invention comprises: acquiring, by a home NodeB, an address of an adjacent NodeB corresponding to the home NodeB, wherein the address is for establishing the X2 connection between the home NodeB and the adjacent NodeB; and sending, by the home NodeB, the acquired address to an X2 gateway.

Sending, by the home NodeB, the acquired address to the X2 gateway comprises: sending, by the home NodeB, the acquired address to the X2 gateway through an X2 interface message.

The X2 interface message comprises one of the following: an X2 establishment request message, a NodeB configuration update message, and an X2 interface message specific for sending the address.

Before sending, by the home NodeB, the acquired address to the X2 gateway, the method further comprises: establishing, by the home NodeB, the X2 connection with the X2 gateway according to the pre-acquired address of the X2 gateway.
the address of the adjacent NodeB is acquired by the following manner: acquiring, by the home NodeB, the address of the adjacent NodeB through a transport network layer address discovery procedure; or acquiring, by the home NodeB, the address of the adjacent NodeB through a home energy management system (HeMS).

A method for managing an establishment of X2 connection according to another embodiment of the present invention comprises: receiving, by an X2 gateway, an address sent by a home NodeB, wherein the address is an address of an adjacent NodeB corresponding to the home NodeB, and the address is for establishing an X2 connection between the home NodeB and the adjacent NodeB; and managing, by the X2 gateway, the establishment of the X2 connection according to the address.

Receiving, by the X2 gateway, the address of the adjacent NodeB corresponding to the home NodeB comprises: receiving, by the X2 gateway, the address through an X2 interface message.

The X2 interface message comprises one of the following: an X2 establishment request message, a NodeB configuration update message, and an X2 interface message specific for sending the address.

Managing the establishment of the X2 connection according to the address by the X2 gateway comprises: the X2 gateway detecting whether a connection with the adjacent NodeB is established or not, and managing the establishment of the X2 connection according to the detecting result and the address.

Managing the establishment of the X2 connection according to the address by the X2 gateway comprises: if the detecting result is that the X2 gateway has established the X2 connection with the adjacent NodeB, forbidding, by the X2 gateway, to request the adjacent NodeB for establishing the X2 connection; and if the detecting result is that the X2 gateway does not establish the X2 connection with the adjacent NodeB, determining to request the adjacent NodeB for establishing the X2 connection by the X2 gateway.

After forbidding, by the X2 gateway, to request establishing the X2 connection to the adjacent NodeB, the method further comprises: when receiving, by the X2 gateway, the address through an X2 establishment request message, the X2 gateway sending a response message in response to the X2 establishment request message to the home NodeB, wherein the response message carries the following information: a NodeB identifier of the X2 gateway or a NodeB identifier of the adjacent NodeB, and X2 interface application layer configuration information of the adjacent NodeB; and when receiving, by the X2 gateway, the address through the first NodeB configuration update message, sending, by the X2 gateway, to the home NodeB, a second NodeB configuration update message or a NodeB configuration update acknowledge message corresponding to the first NodeB configuration update message, wherein the second NodeB configuration update message or the NodeB configuration update acknowledge message comprises: X2 interface application layer configuration information of the adjacent NodeB.

After the X2 gateway determines to request establishing an X2 connection to the adjacent NodeB, the method further comprises: when the X2 gateway receives the address through the first X2 establishment request message, sending, by the X2 gateway, a response message in response to the first X2 establishment request message to the home NodeB, wherein the response message carries a NodeB identifier of the X2 gateway; sending, by the X2 gateway, a second X2 establishment request message to the adjacent NodeB to request establishing a connection with the adjacent NodeB, wherein the second X2 establishment request message carries a NodeB identifier of the X2 gateway; and after the X2 gateway establishes the X2 connection with the adjacent NodeB, sending, by the X2 gateway a NodeB configuration update message to the home NodeB, wherein the NodeB configuration update message carries the X2 interface application layer configuration information of the adjacent NodeB.

After the X2 gateway determines to request establishing the X2 connection to the adjacent NodeB, the method further comprises: when the X2 gateway receives the address through the X2 establishment request message, sending, by the X2 gateway, the X2 establishment request message to the adjacent NodeB to request establishing a connection with the adjacent NodeB, wherein the X2 establishment request message carries the NodeB identifier of the X2 gateway; and after the X2 gateway establishes an X2 connection with the adjacent NodeB, sending, by the X2 gateway, a message in response to the X2 establishment request message to the home NodeB, wherein the response message carries the following information: a NodeB identifier of the X2 gateway or a NodeB identifier of the adjacent NodeB, and an X2 interface application layer configuration information of the adjacent NodeB.

After determining that the X2 gateway needs to request establishing the X2 connection to the adjacent NodeB, the method further comprises: when the X2 gateway receives the address through a first NodeB configuration update message, the X2 gateway sending an X2 establishment request message to the adjacent NodeB to request establishing the X2 connection with the adjacent NodeB, wherein the X2 establishment request message carries a NodeB identifier of the X2 gateway; and after the X2 gateway establishes the X2 connection with the adjacent NodeB, sending, by the X2 gateway to the home NodeB, a second NodeB configuration update message or a NodeB configuration update acknowledge message corresponding to the first NodeB configuration update message, wherein the second NodeB configuration update message or the NodeB configuration update acknowledge message carries the X2 interface application layer configuration information of the adjacent NodeB.

The X2 interface application layer configuration information comprises: information of a serving cell in the adjacent NodeB, information of the adjacent cell of the serving cell, and information of MME Pool in connection with the adjacent NodeB.

Before the X2 gateway receives the address sent by the home NodeB, the method further comprises: acquiring by the home NodeB the address through the transport network layer address discovery procedure or a home energy management system (HeMS), and sending the acquired address to the X2 gateway.

According to another embodiment of the present invention, a device for processing an establishment of X2 connection is provided. The device is provided on a home NodeB and comprises: an acquisition component configured to acquire an address of an adjacent NodeB corresponding to the home NodeB, wherein the address is for establishing the X2 connection between the home NodeB and the adjacent NodeB; and a sending component configured to send the acquired address to the X2 gateway.

The above-mentioned acquisition component is configured to acquire the address of the adjacent NodeB through a transport network layer address discovery procedure.

According to still another embodiment of the present invention, a device for managing an establishment of X2 connection is provided. The device is provided on an X2 gateway and comprises: a receiving component configured to receive an address sent by a home NodeB, wherein the address is an address of an adjacent NodeB corresponding to the home NodeB, and the address is for establishing the X2 connection between the home NodeB and the adjacent NodeB; and a management component configured to manage an establishment of the X2 connection according to the address.

The above-mentioned receiving component is configured to receive the address through an X2 interface message.

The above-mentioned receiving component is configured to receive the address through one of the following X2 interface messages: an X2 establishment request message, a NodeB configuration update message, and an X2 interface message specific for sending the address.

The above-mentioned management component comprises: a detecting component configured to detect whether the X2 gateway establishes a connection with the adjacent NodeB; and a management component configured to manage the establishment of the X2 connection according to the detecting result and the address.

The above-mentioned management component s configured to, if a detecting result is that the X2 gateway establishes the X2 connection with the adjacent NodeB, forbid to request the adjacent NodeB for establishing the X2 connection; and if the detecting result is that the X2 gateway does not establish an X2 connection with the adjacent NodeB, determine to request the adjacent NodeB for establishing the X2 connection.

In the embodiments of the present invention, the home NodeB sends the acquired address of the adjacent NodeB to the X2 gateway. The above-mentioned solution solves the technical problem in the related art that the X2 connection between the home NodeB and the adjacent NodeB cannot be established because the X2 gateway cannot acquire the address of the adjacent NodeB of the home NodeB, thus implementing the establishment of the X2 connection between the home NodeB and the adjacent NodeB.

### Brief Description of the Drawings

The drawings illustrated here provided a further understanding of the present invention and form a part of the present application, The exemplary embodiments and the description thereof are used to explain the present invention without unduly limiting the scope of the present invention, wherein:
Fig. 1 is a flowchart of a method for processing an establishment of X2 connection according to the first embodiment of the present invention;
Fig. 2 is a structural diagram of a device for processing an establishment of X2 connection according to the first embodiment of the present invention;
Fig. 3 is a flowchart of a method for managing an establishment of an X2 connection according to the second embodiment of the present invention;
Fig. 4 is a structural diagram of a device for managing an establishment of X2 connection according to the second embodiment of the present invention;
Fig. 5 is another structural diagram of a device for managing an establishment of X2 connection according to the second embodiment of the present invention;
Fig. 6 is a schematic diagram of network architecture of a home NodeB in the case of having an X2 gateway deployment according to an embodiment of present invention;
Fig. 7 is a schematic diagram of a method for establishing an X2 connection according to the fourth embodiment of the present invention;
Fig. 8 is a schematic diagram of a method for establishing an X2 connection according to the fifth embodiment of the present invention;
Fig. 9 is a schematic diagram of a method for establishing an X2 connection according to the sixth embodiment of the present invention;
Fig. 10 is a schematic diagram of a method for establishing an X2 connection according to the seventh embodiment of the present invention; and
Fig. 11 is a schematic diagram of a method for establishing an X2 connection according to the eighth embodiment of the present invention.

### Detailed Description of Embodiments

The present invention will be described hereinafter in detail with reference to the drawings and in conjunction with the embodiments. It needs to be noted that the embodiments of the present application and the features in the embodiments can be combined with each other if no conflict exists.

Considering the technical problem in the related art that an X2 connection cannot be established between the home NodeB and the adjacent NodeB because the X2 gateway cannot acquire the address of the adjacent NodeB of the home NodeB, the related solution is provided below in conjunction with embodiments and is described in detail.

### Embodiment 1

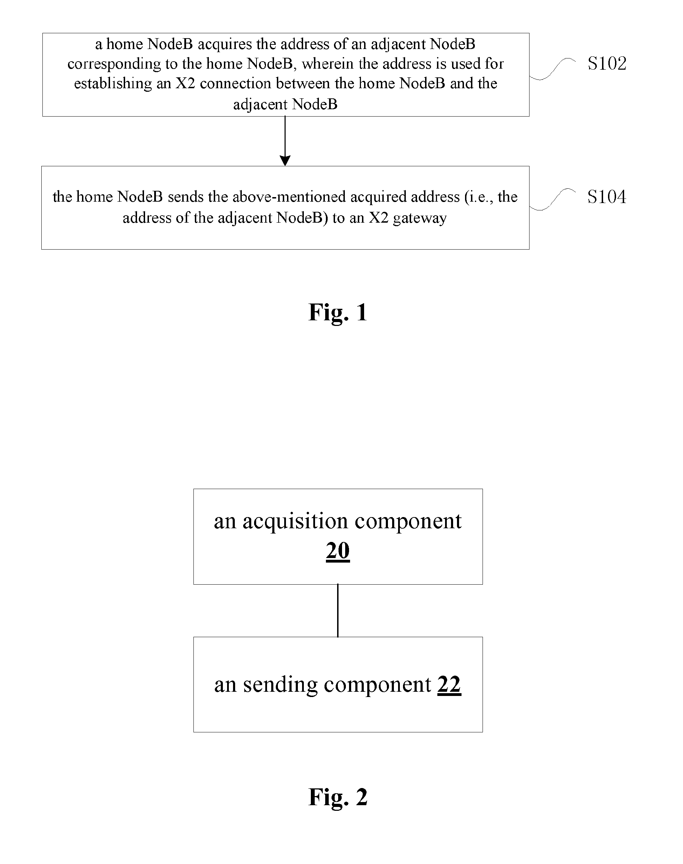

Fig. 1 is a flowchart of a method for processing an establishment method of an X2 connection according to the first embodiment of the present invention. As shown in Fig. 1, the method comprises the following steps:
step 102, a home NodeB acquires the address of an adjacent NodeB corresponding to the home NodeB, wherein the address is used for establishing an X2 connection between the home NodeB and the adjacent NodeB; and
step 104, the home NodeB sends the above-mentioned acquired address (i.e., the address of the adjacent NodeB) to an X2 gateway.

With the above-mentioned processing steps, since the home NodeB sends the acquired address of the adjacent NodeB to the X2 gateway, the X2 gateway acquires the address of the adjacent NodeB, so as to ensure the smooth process of establishing the X2 connection between the home NodeB and the adjacent NodeB.

In the embodiment, the home NodeB sends the above-mentioned acquired address to the X2 gateway through an X2 interface message. The X2 interface message comprises, but not limited to, one of the following: an X2 establishment request message, a NodeB configuration update message, and an X2 interface message specific for sending the address.

For ensuring the home NodeB to send the above-mentioned address to the X2 gateway smoothly, before the home NodeB sends the acquired address to the X2 gateway, the home NodeB is required to establish the X2 connection with the X2 gateway according to the pre-acquired address of the X2 gateway.

The home NodeB may acquire the address of the adjacent NodeB by many methods. For example, the above-mentioned address of the adjacent NodeB is acquired through local configuration, or through a home energy management system (HeMS), or through a transport network layer address discovery procedure.

In an embodiment, a device for processing an establishment of an X2 connection is provided. The device is provided on a home NodeB and is for implementing the above-mentioned embodiments and preferred embodiments, which has been described and will not be explained here. The components in the device are described below. As used below, the term "component" is a combination of software and/or hardware capable of implementing predetermined functions. Although the device described in the following embodiment may be preferably implemented by software, it would be conceived to implement hardware or a combination of software and hardware. Fig. 2 is a structural diagram of a device for processing an establishment of X2 connection according to the first embodiment of the present invention. As shown in Fig. 2, the device comprises:
an acquisition component **20,** connected to a sending component **22,** and configured to acquire the address of an adjacent NodeB corresponding to the home NodeB, wherein the address is used for establishing an X2 connection between the home NodeB and the adjacent NodeB; and
the sending component **22** configured to send the above-mentioned acquired address to an X2 gateway.

Through the functions implemented by the above-mentioned processing components, the X2 gateway may also acquire the address of the adjacent NodeB, so as to ensure the smooth process of establishing the X2 connection between the home NodeB and the adjacent NodeB.

In the embodiment, the above-mentioned acquisition component **20** is configured to acquire the address of the adjacent NodeB through a transport network layer address discovery procedure.

### Embodiment 2

The establishment-processing solution for an X2 connection in the embodiment corresponds to the solution in embodiment 1.

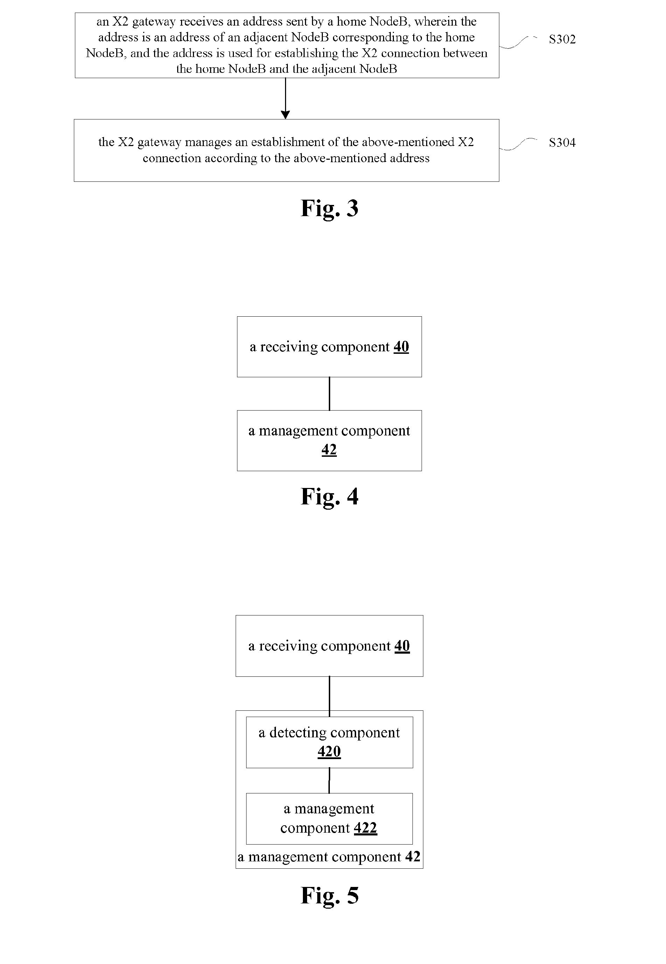

Fig. 3 is a flowchart of a method for managing an establishment of X2 connection according to the second embodiment of the present invention. As shown in Fig. 3, the method comprises the steps as follow:
Step 302, an X2 gateway receives an address sent by a home NodeB, wherein the address is an address of an adjacent NodeB corresponding to the home NodeB, and the address is used for establishing the X2 connection between the home NodeB and the adjacent NodeB; and
Step 304, the X2 gateway manages an establishment of the above-mentioned X2 connection according to the above-mentioned address.

Similar to the description in the first embodiment, the X2 gateway receives the address of the adjacent NodeB sent by the home NodeB, i.e., X2 gateway acquires the above-mentioned address of the adjacent NodeB, so as to ensure the smooth process of establishing the X2 connection between the home NodeB and the adjacent NodeB.

In the embodiment, the X2 gateway receives the address of the adjacent NodeB corresponding to the home NodeB through an X2 interface message which comprises, but not limited to, one of the following: an X2 establishment request message, a NodeB configuration update message, and an X2 interface message specific for sending the address (i.e., an added X2 interface message).

In the step 304, the step of the X2 gateway managing the establishment of the X2 connection according to the above-mentioned address may comprises the following steps: the X2 gateway detects whether the connection with the adjacent NodeB is established or not, and manages the establishment of the X2 connection according to the detecting result and the above-mentioned address. The X2 gateway manages the establishment of the X2 connection according to the address, specifically implemented by the following manner: 1. if the detecting result is that the X2 gateway establishes an X2 connection with the adjacent NodeB, the X2 gateway is forbidden to request the adjacent NodeB for establishing the X2 connection; or 2. if the detecting result is that the X2 gateway does not establish the X2 connection with the adjacent NodeB, the X2 gateway is required to request the adjacent NodeB for establishing the X2 connection.

In the case of the above-mentioned first detecting result, after forbidding the X2 gateway to request the adjacent NodeB for establishing the X2 connection, the following two processing processes may be included according to different manners of the X2 gateway acquiring the above-mentioned address:
(1) When the X2 gateway receives the above-mentioned address through the X2 establishment request message, the X2 gateway sends to the home NodeB a response message in response to the above-mentioned X2 establishment request message, wherein the response message carries the following information: a NodeB identifier of the X2 gateway or a NodeB identifier of the adjacent NodeB, and X2 interface application layer configuration information of the adjacent NodeB; and
(2) when the X2 gateway receives the above-mentioned address through the first NodeB configuration update message, the X2 gateway sends to the home NodeB a second NodeB configuration update message or a NodeB configuration update acknowledge message corresponding to the first NodeB configuration update message, wherein the second NodeB configuration update message or the above-mentioned NodeB configuration update acknowledge message comprises: the X2 interface application layer configuration information of the adjacent NodeB.

In the case of the above-mentioned second detecting result, after it is determined that the X2 gateway is required to request the adjacent NodeB for establishing the X2 connection, the following processing processes may be included according to different manners of the X2 gateway acquiring the above-mentioned address:
a first processing process, which is a processing process when the X2 gateway receives the address through the first X2 establishment request message, the processing process comprising the following two cases:
in a first case, when the X2 gateway receives the address through a first X2 establishment request message, the X2 gateway sends a message in response to the first X2 establishment request message to the home NodeB, wherein the above-mentioned response message carries the NodeB identifier of the X2 gateway; then the X2 gateway sends a second X2 establishment request message to the adjacent NodeB to request establishing a connection with the adjacent NodeB, wherein the second X2 establishment request message carries the NodeB identifier of the X2 gateway; and after the X2 gateway establishes an X2 connection with the adjacent NodeB, the X2 gateway sends a NodeB configuration update message to the home NodeB, wherein the NodeB configuration update message carries the X2 interface application layer configuration information of the adjacent NodeB.

In a second case: when the X2 gateway receives the above-mentioned address through an X2 establishment request message, the X2 gateway sends an X2 establishment request message to the adjacent NodeB to request establishing a connection with the adjacent NodeB, wherein the X2 establishment request message carries the NodeB identifier of the X2 gateway; and after the X2 gateway establishes the X2 connection with the adjacent NodeB, the X2 gateway sends a message in response to the X2 establishment request message to the home NodeB, wherein the response message carries the following information: a NodeB identifier of the X2 gateway or a NodeB identifier of the adjacent NodeB, and X2 interface application layer configuration information of the adjacent NodeB.

A second processing process: after it is determined that the X2 gateway needs to request establishing an X2 connection to the adjacent NodeB, when the X2 gateway receives the above-mentioned address through the first NodeB configuration update message, the X2 gateway sends an X2 establishment request message to the adjacent NodeB to request establishing the X2 connection with the adjacent NodeB, wherein the X2 establishment request message carries the NodeB identifier of the X2 gateway; and after the X2 gateway establishes the X2 connection with the adjacent NodeB, the X2 gateway sends, to the home NodeB, a second NodeB configuration update message or a NodeB configuration update acknowledge message corresponding to the first NodeB configuration update message, wherein the above-mentioned second NodeB configuration update message or the above-mentioned NodeB configuration update acknowledge message carries the X2 interface application layer configuration information of the adjacent NodeB.

In the embodiment, the above-mentioned X2 interface application layer configuration information comprises but not limited to: information of the serving cell in the adjacent NodeB, information of the adjacent cell of the serving cell, and information of MME Pool in connection with the adjacent NodeB.

In the embodiment, before the X2 gateway receives the address sent by the home NodeB, the home NodeB is required to acquire the address of the adjacent NodeB. The home NodeB may acquire the address of the adjacent NodeB by many methods, for example, acquiring the above-mentioned address of the adjacent NodeB through local configuration, or through a home energy management system (HeMS), or through a transport network layer address discovery procedure. After acquiring the above-mentioned address, the home NodeB sends the acquired address to the X2 gateway.

In the embodiment, a device for managing an establishment of X2 connection is provided. The device is provided on an X2 gateway and for implementing the above-mentioned embodiments and preferred embodiments, which has been described and will not be explained here. The components in the device are described below. As used below, the term "component" is a combination of software and/or hardware capable of implementing predetermined functions. Although the device described in the following embodiment may be preferably implemented by software, it would be conceived to implement hardware or a combination of software and hardware. Fig. 4 shows a structural diagram of a device for managing an establishment of X2 connection according to the second embodiment of the present invention. As shown in Fig. 4, the device comprises:
a receiving component **40** connected to a management component **42** and configured to receive the address sent by the home NodeB, wherein the address is an address of an adjacent NodeB corresponding to the home NodeB, and the address is used for establishing an X2 connection between the home NodeB and the adjacent NodeB; and
the management component **42** configured to manage the establishment of the X2 connection according to the above-mentioned address received by the above-mentioned receiving component **40,** wherein the X2 connection is an X2 connection between the home NodeB and the adjacent NodeB.

In the embodiment, the above-mentioned receiving component **40** is configured to receive the above-mentioned address through an X2 interface message.

The above-mentioned receiving component **40** is configured to receive the address through one of the following X2 interface messages: an X2 establishment request message, a NodeB configuration update message, and an X2 interface message specific for sending the above-mentioned address.

In a preferred embodiment of the present invention, as shown in Fig. 5, the above-mentioned management component **42** comprises: a detecting component **420** connected to a management component **422** and configured to detect whether the X2 gateway establishes a connection with the adjacent NodeB; and the management component **422** configured to manage the establishment of the X2 connection according to the detecting result and the above-mentioned address.

The above-mentioned management component **42** is configured to, when it is detected that the X2 gateway establishes the X2 connection with the adjacent NodeB, forbid to request the adjacent NodeB for establishing the X2 connection; and when it is detected that the X2 gateway does not establish the X2 connection with the adjacent NodeB, determine to request the adjacent NodeB for establishing an X2 connection.

### Embodiment 3

The solution in the embodiment may be considered as a processing solution combining the first embodiment with the second embodiment. A method for establishing an X2 connection provided by the embodiment may enable the HeNB to establish an X2 connection with the adjacent NodeB smoothly after acquiring the TNL address of the adjacent NodeB through an ANR mode in a case having an X2 gateway (GW) deployment. The method for establishing an X2 connection provided by the embodiment specifically comprises the steps as follows:
a home NodeB sends the address of the adjacent NodeB acquired through a TNL address discovery procedure to the X2 gateway; and the X2 gateway detects whether an X2 connection is established with the adjacent NodeB and carries out the corresponding subsequent processing.

In the embodiment, before the home NodeB sends the address of the adjacent NodeB acquired through the TNL address discovery procedure to the X2 gateway, the home NodeB has been established the X2 connection with the X2 gateway, or the home NodeB has acquired the address of the X2 gateway, but has not yet established the X2 connection with the X2 gateway.

In the embodiment, the home NodeB sending the address of the adjacent NodeB acquired through the TNL address discovery procedure to the gateway further comprises: the home NodeB sends the address of the adjacent NodeB acquired through the TNL address discovery procedure to the X2 gateway through an X2 interface message; the X2 interface message comprises: an X2 establishment request message, a NodeB configuration update message, or an added X2 interface message.

In the embodiment, the X2 gateway detecting whether the X2 connection is established with the adjacent NodeB and carrying out the corresponding subsequent processing also comprises: if the X2 gateway has established the X2 connection with the adjacent NodeB, it is not required to initiate a procedure for establishing the X2 connection with the adjacent NodeB after receiving the address of the adjacent NodeB; and if the X2 gateway has not yet established the X2 connection with the adjacent NodeB, it is required to initiate a procedure for establishing the X2 connection with the adjacent NodeB after receiving the address of the adjacent NodeB.

In the embodiment, the step that if the X2 gateway has established the X2 connection with the adjacent NodeB, it is not required to initiate a procedure for establishing the X2 connection with the adjacent NodeB after receiving the address of the adjacent NodeB comprises:
(1) if the home NodeB sends the address of the adjacent NodeB acquired through the TNL address discovery procedure to the X2 gateway through an X2 establishment request message, the X2 gateway replies an X2 establishing response message to the home NodeB, the X2 establishment response message containing the NodeB identifier of the X2 gateway or the NodeB identifier of the adjacent NodeB, the information of serving cell in the adjacent NodeB, the information of the adjacent cell of the serving cell, and the information of the connected MME Pool; and
(2) if the home NodeB sends the address of the adjacent NodeB acquired through the TNL address discovery procedure to the X2 gateway through an X2 interface NodeB configuration update message, the X2 gateway sends the X2 interface NodeB configuration update message to the home NodeB, the NodeB configuration update message containing the information of serving cell in the adjacent NodeB, the information of the adjacent cell of the serving cell, and the information of the connected MME Pool.

The step that if the X2 gateway has not yet established the X2 connection with the adjacent NodeB, it is required to initiate a procedure for establishing the X2 connection for the adjacent NodeB after receiving the address of the adjacent NodeB comprises: if the home NodeB sends the address of the adjacent NodeB acquired through the TNL address discovery procedure to the X2 gateway through an X2 establishment request message, the X2 gateway firstly sends an X2 establishment response message to the home NodeB, the X2 establishment response message containing the NodeB identifier (eNB ID) of the X2 gateway; the X2 gateway sends an X2 establishment request message to the adjacent NodeB to initiate a procedure for establishing the X2 connection, the X2 establishment request message containing the NodeB identifier (eNB ID) of the X2 gateway; and after the X2 gateway establishes the X2 connection with the adjacent NodeB, the X2 gateway sends an X2 interface NodeB configuration update message to the home NodeB, the NodeB configuration update message containing the information of serving cell under the adjacent NodeB, the information of the adjacent cell of the serving cell, and the information of the connected MME Pool.

The step that if the X2 gateway has not yet established the X2 connection with the adjacent NodeB, it is required to initiate a procedure for establishing the X2 connection for the adjacent NodeB after receiving the address of the adjacent NodeB comprises: if the home NodeB sends the address of the adjacent NodeB acquired through the TNL address discovery procedure to the X2 gateway through an X2 establishment request message, the X2 gateway sends an X2 establishment request message to the adjacent NodeB to initiate a procedure for establishing an X2 connection, the X2 establishment request message containing the NodeB identifier (eNB ID) of the X2 gateway; and after the X2 gateway establishes the X2 connection with the adjacent NodeB, the X2 gateway sends an X2 establishing response message to the home NodeB, the X2 establishment response message containing the NodeB identifier of the X2 gateway or the NodeB identifier of the adjacent NodeB, the information of serving cell in the adjacent NodeB, the information of the adjacent cell of the serving cell, and the information of the connected MME Pool.

The step that if the X2 gateway has not yet established an X2 connection with the adjacent NodeB, it is required to initiate a procedure for establishing the X2 connection for the adjacent NodeB after receiving the address of the adjacent NodeB comprises: if the home NodeB sends the address of the adjacent NodeB acquired through the TNL address discovery procedure to the X2 gateway through an X2 interface NodeB configuration update message, the X2 gateway sends an X2 establishment request message to the adjacent NodeB to initiate a procedure for establishing an X2 connection, wherein the X2 establishment request message contains the NodeB identifier (eNB ID) of the X2 gateway; and then the X2 gateway sends an X2 interface NodeB configuration update message or an X2 interface NodeB configuration update acknowledge message to the home NodeB, wherein the NodeB configuration update message or the NodeB configuration update acknowledge message contains the X2 interface application layer configuration information of the adjacent NodeB, and the X2 interface application layer configuration information contains the information of serving cell in the adjacent NodeB, the information of the adjacent cell of the serving cell, and the information of the connected MME Pool.

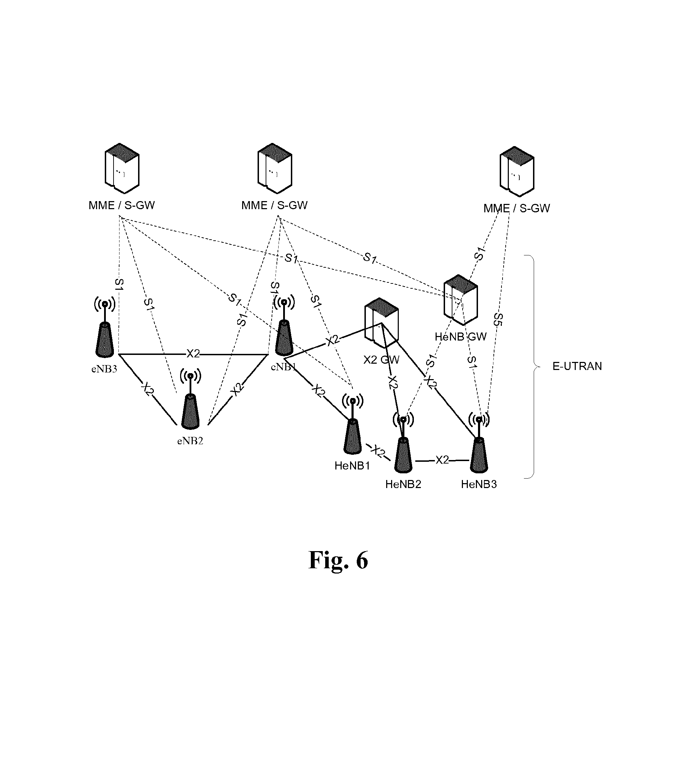

For better understanding of the above-mentioned first to third embodiment, detailed description is provided below in conjunction with the fourth to eighth embodiment. The following embodiments employ the network architecture of home NodeB as shown in Fig. 6. In the architecture as shown in Fig. 6, a home NodeB (HeNB) may be connected with an MME through HeNB GW as S1 proxy, and in LTE R11, HeNB may also be connected to the adjacent NodeB (the home NodeB or the Macro NodeB) through an X2 gateway (X2 GW) as X2 proxy. Both of the HeNB GW and X2 GW may be used as an optional deployment. As shown in Fig. 6, the eNB1 establishes proxy X2 interfaces with HeNB2 and HeNB3 through an X2 GW, and a proxy X2 interface is established between the HeNB2 and the HeNB3 through an X2 GW. The eNB1 may also establish a direct X2 interface with the HeNB1.

### Embodiment 4

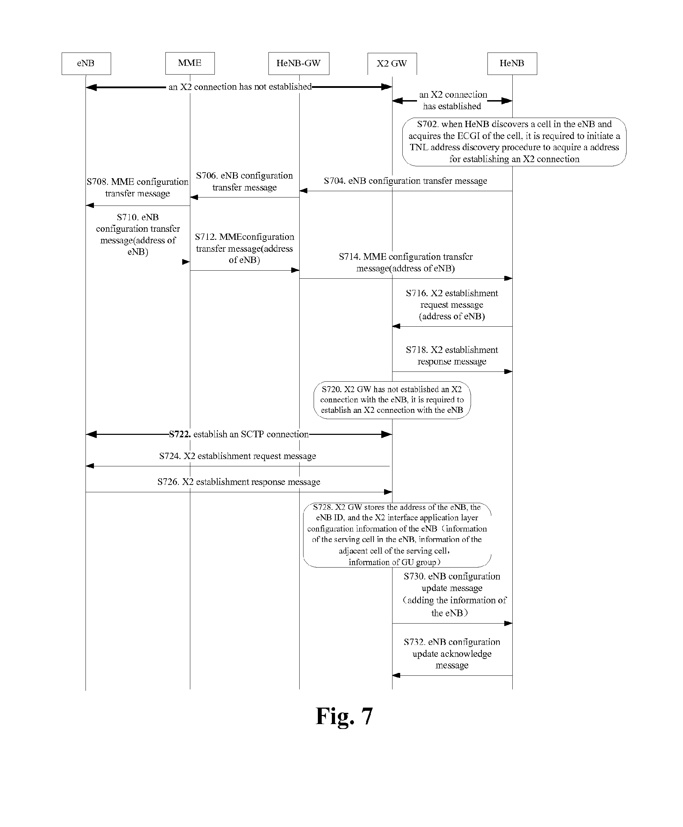

The embodiment describes a method for establishing an X2 connection in the case that an X2 GW has not established an X2 connection with an eNB and a HeNB is employed to send the address of the eNB to the X2 GW through an X2 establishment request message. As shown in Fig. 7, the method comprises the steps as follows:
step 702, when a UE in the HeNB cell measures a strong signal of the adjacent cell, the UE sends a measurement report to the HeNB, wherein the measurement report may contain PCI, ECGI, TAC, PLMN list, etc. In the embodiment, the adjacent cell is a cell in the eNB, or the adjacent cell may also be a cell in the adjacent HeNB, thus the measurement report may also comprise CSG ID of the adjacent cell, and the member state of the UE in the cell. After the HeNB acquires the ECGI (PLMN ID + cell ID) of the adjacent cell, it is detected whether the adjacent cell is a macro cell through the information such as PCI or ECGI or CSG ID. If it is a macro cell, take the first 20 bits of the cell ID as its eNB ID; and if it is a home eNB cell, take all 28 bits of the cell ID as its eNB ID. After the HeNB acquires eNB ID and TAI (PLMN+TAC) of the adjacent NodeB, it is required to initiate a TNL address discovery procedure to acquire a transport network layer address for establishing an X2 connection.
Step 704, the HeNB sends an eNodeB configuration transfer message (eNB configuration transfer) to the MME through the S1 interface. In the embodiment, the HeNB establishes a S1 connection with the MME through the HeNB GW as S1 proxy, thus the eNB configuration transfer message is firstly sent to the HeNB GW. The message contains eNB ID and TAI of source and target eNBs, and an instruction of which a request type is a TNL address. If the HeNB is not connected to the HeNB GW, the message is directly sent to the MME without through the HeNB GW.
Step 706, after receiving the eNB configuration transfer message, the HeNB GW sends the eNB configuration transfer message to the MME.
Step 708, after receiving the eNB configuration transfer message, the MME sending an MME configuration transfer message to the eNB, wherein the MME may determine the target eNB to which the MME configuration transfer message is sent according to the eNB ID and TAI of the target eNB in the eNB configuration transfer message.
Step 710, after receiving the MME configuration transfer message, the eNB replying an eNB configuration transfer message to the MME, the message containing a transport network layer address of eNB for establishing an X2 connection.
Step 712, after receiving the eNB configuration transfer message, the MME sends the MME configuration transfer message to the HeNB according to the eNB ID and TAI of the target eNB, the message containing a transport network layer address of the eNB for use in establishing an X2 connection. In the embodiment, since the HeNB establishes a S 1 connection with the MME through the HeNB GW which is regarded as S1 proxy, the MME configuration transfer message is sent to the HeNB GW firstly.
Step 714, after receiving the message, the HeNB GW sends the message to the HeNB, the message containing a transport network layer address of the eNB for establishing an X2 connection.
Step 716, in the embodiment, the HeNB has established an X2 connection with the X2 GW. Specifically, after powered on, the HeNB may acquire the address of the X2 GW from its network management network element HeMS, and then establish an X2 connection with the X2 GW. After acquiring the address of the eNB through the TNL address discovery procedure, the HeNB sends an X2 establishment request message to the X2 GW, wherein the message carries the previously acquired address of the eNB to trigger the procedure of establishing an X2 connection between the X2 GW and the eNB, and the message may also contain the X2 interface application layer configuration information of the HeNB which comprises the eNB ID of the HeNB, information of the serving cell under the HeNB, information of the adjacent cell of the serving cell, and information of the connected MME Pool.

If the HeNB has not yet established an X2 connection after acquiring the address of X2 GW, the HeNB establishes a Stream Control Transmission Protocol (SCTP) connection with the X2 gateway firstly after receiving the address of the eNB, and then sends an X2 establishment request message to the X2 GW, the message carrying the previously acquired address of the eNB.
Step 718, the X2 GW sends an X2 establishment response message to the HeNB, the message containing the eNB ID of the X2 GW.
Step 720, if the X2 GW detects that it has not established an X2 connection with the eNB corresponding to the address of eNB which is acquired in step 716, it is required to establish an X2 connection with the eNB. Step 720 may be performed before or after the step 718.
Step 722, the X2 GW establishes an SCTP connection with the eNB according to the address of the eNB.
Step 724, after establishing the SCTP connection with the eNB, the X2 GW sends an X2 establishment request message to the eNB, the message containing the eNB ID of the X2 GW, and also containing the X2 interface application layer configuration information of the HeNB which comprises information of the serving cell in the HeNB, information of the adjacent cell of the serving cell, and information of the connected MME Pool.
Step 726, the eNB sends an X2 establishment response message to reply the X2 GW, wherein X2 establishment response message contains the X2 interface application layer configuration information of the eNB which comprises the eNB ID of the eNB, information of the serving cell in the eNB, information of the adjacent cell of the serving cell, and information of the connected MME Pool.
Step 728, the X2 GW stores the address of the eNB, the eNB ID, and the X2 interface application layer configuration information of the eNB which comprises information of the serving cell in the eNB, information of the adjacent cell of the serving cell, and information of the connected MME Pool.
Step 730, the X2 GW sends an eNB configuration update message about X2 interface to the HeNB to add the X2 application layer configuration information of the eNB to the HeNB, wherein the eNB configuration update message contains information of the serving cell in the eNB, information of the adjacent cell of the serving cell, and information of the connected MME Pool.
Step 732, the HeNB replies an eNB configuration update acknowledge message to the X2 GW after successfully adding the information of the eNB.

### Embodiment 5

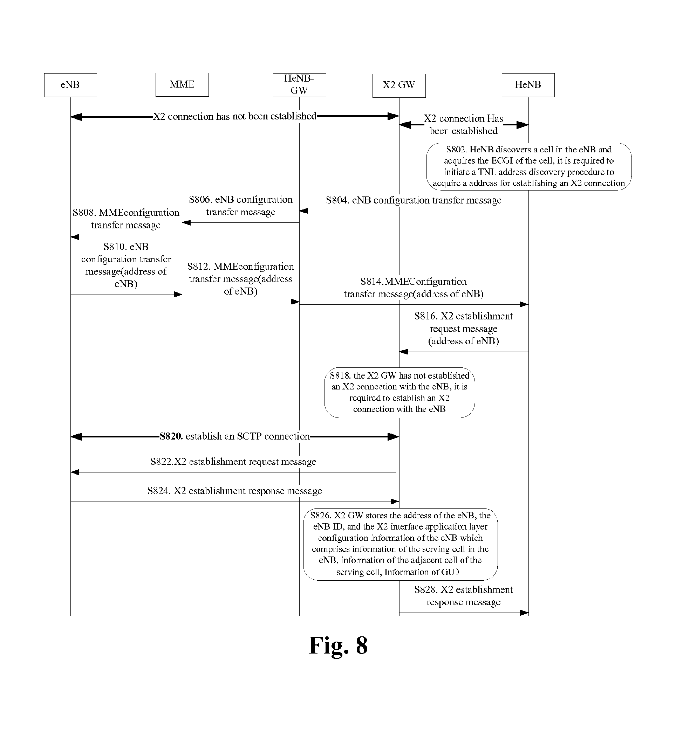

The embodiment describes a method for establishing an X2 connection in the case that an X2 GW has not established an X2 connection with an eNB and a HeNB is employed to send the address of the eNB to the X2 GW through an X2 establishment request message. As shown in Fig. 8, the method comprises the steps as follows:
Step 802 to step 816 are the same as the step 702 to step 716 in the fourth embodiment, and are not repeated therein.
Step 818, if the X2 GW detects that it has not established an X2 connection with the NodeB corresponding to the address of the eNB which is acquired in step 808, it is required to establish an X2 connection with the eNB.
Step 820, the X2 GW establishes an SCTP connection with the eNB according to the address of the eNB.
Step 822, after establishing an SCTP connection with the eNB, the X2 GW sends an X2 establishment request message to the eNB, the message containing the eNB ID of the X2 GW, and also containing the X2 interface application layer configuration information of the HeNB which comprises information of the serving cell in the HeNB, information of the adjacent cell of the serving cell, and information of the connected MME Pool.
Step 824, the eNB sends an X2 establishment response message to reply the X2 GW, wherein the X2 establishment response message contains the X2 interface application layer configuration information of the eNB which comprises the eNB ID of the eNB, information of the serving cell under the eNB, information of the adjacent cell of the serving cell, and information of the connected MME Pool.
Step 826, the X2 GW stores the address of the eNB, the eNB ID, and the X2 interface application layer configuration information of the eNB which comprises information of the serving cell in the eNB, information of the adjacent cell of the serving cell, and information of the connected MME Pool.
Step 828, X2 GW sends an X2 establishment response message to the HeNB to add the X2 application layer configuration information of the eNB to the HeNB, wherein the X2 establishment response message contains the eNB ID of the X2 GW or the eNB, information of the adjacent cell of the serving cell, and information of the connected MME Pool.

### Embodiment 6

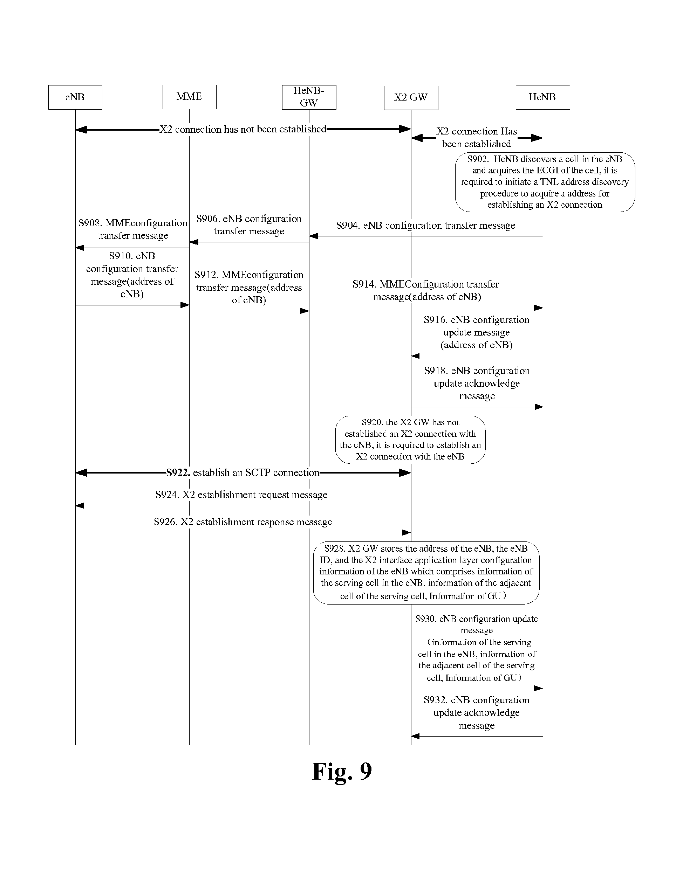

The embodiment describes a method for establishing an X2 connection in the case that an X2 GW has not established an X2 connection with an eNB and a HeNB is employed to send the address of the eNB to the X2 GW through an X2 interface eNB configuration update message. As shown in Fig. 9, the method comprises the steps as follows:
Step 902 to step 914 are the same as the step 702 to step 714 in the fourth embodiment, and are not repeated therein.
Step 916, in the embodiment, the HeNB has established an X2 connection with the X2 GW. Specifically, after powered on, the HeNB may acquire the address of the X2 GW from its network management network element HeMS, and then establish an X2 connection with the X2 GW. After acquiring the address of the eNB through an TNL address discovery procedure, the HeNB sends an X2 interface eNB configuration update message to the X2 GW, the message carries the previously acquired address of the eNB to trigger the procedure of establishing an X2 connection between the X2 GW and the eNB.

If the HeNB has not yet established an X2 connection after acquiring the address of the X2 GW, the HeNB establishes an X2 connection with the X2 gateway firstly after receiving the address of the eNB, and then sends an X2 interface eNB configuration update message to the X2 GW, the message carrying the previously acquired address of the eNB.
Step 918, the X2 GW sends an eNB configuration update acknowledge message to the HeNB.

The step is performed between the step 916 and the step 930. Optionally, if the step may be performed after the step 928, the eNB configuration update message may contain: information of the adjacent cell of the serving cell, and information of the connected MME Pool, and it is not required to perform the step 930 and the step 932.
Step 920, if the X2 GW detects that it has not established an X2 connection with the eNB corresponding to the address of eNB is acquired in step 908, it is required to establish an X2 connection with the eNB.
Step 922, the X2 GW establishes an SCTP connection with the eNB according to the address of the eNB.
Step 924, after establishing the SCTP connection with the eNB, the X2 GW sends an X2 establishment request message to the eNB, the message containing the eNB ID of the X2 GW, and also containing the X2 interface application layer configuration information of HeNB which comprises information of the serving cell in the HeNB, information of the adjacent cell of the serving cell, and information of the connected MME Pool.
Step 926, the eNB sends an X2 establishment response message to reply the X2 GW, wherein the X2 establishment response message contains the X2 interface application layer configuration information of eNB which comprises the eNB ID of the eNB, information of the serving cell in the eNB, information of the adjacent cell of the serving cell, and information of the connected MME Pool.
Step 928, the X2 GW stores the address of the eNB, the eNB ID, and the X2 interface application layer configuration information of the eNB which comprises information of the serving cell in the eNB, information of the adjacent cell of the serving cell, and information of the connected MME Pool.
Step 930, the X2 GW sends a eNB configuration update message to the HeNB to add the X2 application layer configuration information of the eNB to the HeNB, wherein the eNB configuration update message contains information of the serving cell in the eNB, information of the adjacent cell of the serving cell, and information of the connected MME Pool.
Step 932, the HeNB replies an eNB configuration update acknowledge message to the X2 GW after successfully adding the information of the eNB.

### Embodiment 7

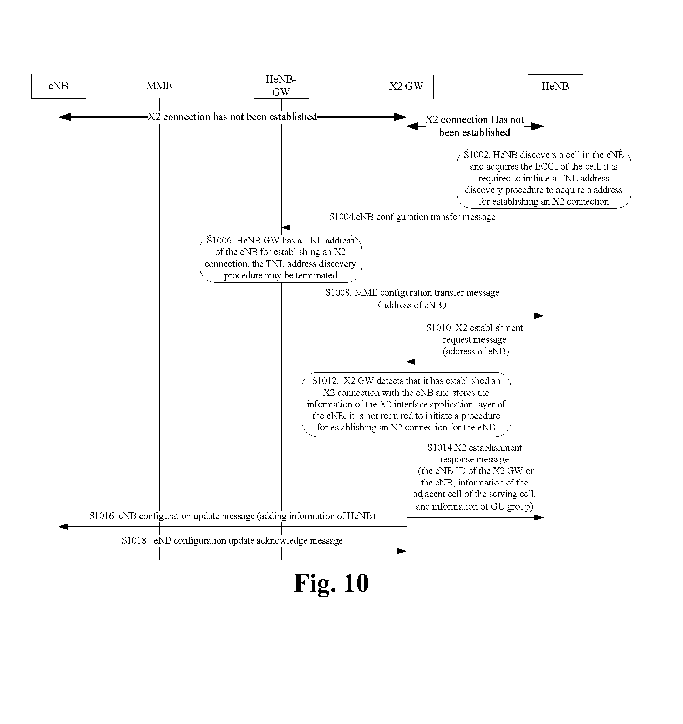

The embodiment describes a method for establishing an X2 connection in the case that an X2 GW has established an X2 connection with an eNB and a HeNB is employed to send the address of the eNB to the X2 GW through an X2 establishment request message. As shown in Fig. 10, the method comprises the steps as follows:
Step 1002 to step 1004 are the same as the step 702 to step 704 in the fourth embodiment, and are not repeated therein.
Step 1006, in the embodiment, the HeNB establishes an S1 connection with the MME through the HeNB GW which is regarded as an S1 proxy, thus the eNB configuration transfer message in the step 1002 is sent to the HeNB GW firstly. In the embodiment, if the HeNB GW has a TNL address of the eNB for establishing an X2 connection, the TNL address discovery procedure may be terminated, and it is not required to send an eNB configuration transfer message to the MME. If the HeNB is not connected with the HeNB GW, the message is directly sent to the MME without through the HeNB GW, and the subsequent TNL address discovery procedure is performed completely.
Step 1008, the HeNB GW replies an MME configuration transfer message to the HeNB, wherein the message contains the TNL address of the eNB for establishing an X2 connection.
Step 1010, in the embodiment, the HeNB has established an X2 connection with the X2 GW. After acquiring the address of the eNB through a TNL address discovery procedure, the HeNB sends an X2 establishment request message to the X2 GW, the message carries the previously acquired address of the eNB to trigger the procedure of establishing an X2 connection between the X2 GW and the eNB, and the message may also contain the X2 interface application layer configuration information of the HeNB which comprises the eNB ID of the HeNB, information of the serving cell under the HeNB, information of the adjacent cell of the serving cell, and information of the connected MME Pool.

If the HeNB has not yet established an X2 connection after acquiring the address of the X2 GW, the HeNB establishes an SCTP connection with the X2 gateway firstly after receiving the address of eNB, and then sends an X2 establishment request message to the X2 GW, the message carrying the previously acquired address of the eNB.
Step 1012, if the X2 GW detects that it has established an X2 connection with the eNB and stores the information of the X2 interface application layer of the eNB, it is not required to initiate a procedure for establishing an X2 connection for the eNB.
Step 1014, the X2 GW sends an X2 establishment response message to the HeNB to add the X2 application layer configuration information of the eNB to the HeNB, wherein the X2 establishment response message contains the eNB ID of the X2 GW or the eNB, information of the adjacent cell of the serving cell, and information of the connected MME Pool.
Step 1016, if the X2 GW has not yet sent the X2 interface application layer configuration information of the HeNB to the eNB, the X2 GW sends an eNB configuration update message to the eNB which comprises the eNB ID of the X2 GW, information of the serving cell in the HeNB, information of the adjacent cell of the serving cell, and information of the connected MME Pool.
Step 1018, the eNB sends an eNB configuration update acknowledge message to the X2 GW.

### Embodiment 8

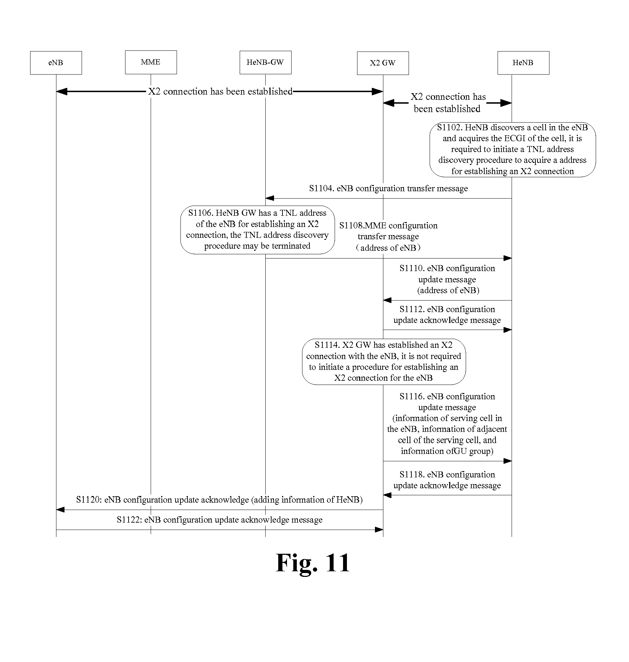

The embodiment describes a method for establishing an X2 connection in the case that an X2 GW has established an X2 connection with an eNB and a HeNB is employed to send the address of the eNB to the X2 GW through an X2 interface NodeB configuration update message. As shown in Fig. 11, the method comprises the steps as follows:
Step 1102 to step 1108 are the same as the step 1002 to step 1008 in the seventh embodiment, and are not repeated therein.
Step 1110, in the embodiment, the HeNB has established an X2 connection with the X2 GW. After acquiring the address of eNB, the HeNB sends an X2 interface eNB configuration update message to the X2 GW, the message carries the previously acquired address of the eNB to trigger the procedure of establishing an X2 connection between the X2 GW and the eNB.

If the HeNB has not yet established an X2 connection after acquiring the address of X2 GW, the HeNB establishes an X2 connection with the X2 gateway firstly after receiving the address of eNB, and then sends an X2 interface eNB configuration update message to the X2 GW, the message carrying the previously acquired address of the eNB.
Step 1112, the X2 GW sends an eNB configuration update acknowledge message to the HeNB.

The step is performed between the step 1110 and the step 1116. Optionally, if the step is performed after the step 1114, the NodeB configuration update message may contain: information of the serving cell in the eNB, information of the adjacent cell of the serving cell, and information of the connected MME Pool, and it is not required to perform the step 1116 and the step 1118.
Step 1114, if X2 GW detects that it has established an X2 connection with the eNB, it is not required to initiate a procedure for establishing an X2 connection for the eNB.
Step 1116, the X2 GW sends an eNB configuration update message to the HeNB, the message containing: information of serving cell in the eNB, information of adjacent cell of the serving cell, and information of the connected MME Pool.
Step 1118, the HeNB sends an eNB configuration update acknowledge message to the X2 GW.
Step 1120, the X2 GW sends an eNB configuration update message to the eNB, the message containing: information of the serving cell in the HeNB, information of the adjacent cell of the serving cell, and information of the connected MME Pool. Step 1116 may be performed before or after the step 1120.
Step 1122, the HeNB sends an eNB configuration update acknowledge message to the X2 GW.

In another embodiment, also provided is software for executing the technical solution described in the above-mentioned embodiments and preferred embodiments.

In another embodiment, also provided is a storage medium storing the above-mentioned software, the storage medium including but not limited to: optical disk, floppy disk, hard disk, erasable memory, etc.

Obviously, those skilled in the art shall understand that the above-mentioned components and steps of the present invention can be realized by using general purpose calculating device, can be integrated in one calculating device or distributed on a network which consists of a plurality of calculating devices. Alternatively the components and the steps of the present invention can be realized by using the executable program code of the calculating device. Consequently they can be stored in the storing device and executed by the calculating device, or they are made into integrated circuit component respectively, or a plurality of components or steps thereof are made into one integrated circuit component. In the way, the present invention is not restricted to any particular hardware and software combination.

Above description is only to illustrate the preferred embodiments but not to limit the present invention. Various alterations and changes to the present invention are apparent to those skilled in the art. The protective scope defined in the present invention shall comprise any modification, equivalent substitution and improvement within the spirit and principle of the present invention.

## Claims

1. A method for processing an establishment of X2 connection, **characterized by** comprising:
acquiring, by a home NodeB, an address of an adjacent NodeB corresponding to the home NodeB, wherein the address is used for establishing an X2 connection between the home NodeB and the adjacent NodeB; and
sending, by the home NodeB, the acquired address to an X2 gateway.

2. The method according to claim 1, **characterized in that** sending, by the home NodeB, the acquired address to the X2 gateway comprises:
sending, by the home NodeB, the acquired address to the X2 gateway through an X2 interface message.

3. The method according to claim 2, **characterized in that** the X2 interface message comprises one of the following:
an X2 establishment request message, a NodeB configuration update message, and an X2 interface message specific for sending the address.

4. The method according to claim 1, **characterized in that** before sending, by the home NodeB, the acquired address to the X2 gateway, the method further comprises:
establishing, by the home NodeB, an X2 connection with the X2 gateway according to the previously acquired address of the X2 gateway.

5. The method according to any one of claims 1 to 4, **characterized in that** the address of the adjacent NodeB is acquired by the following manner:
acquiring, by the home NodeB, the address of the adjacent NodeB through a transport network layer address discovery procedure; or
acquiring, by the home NodeB, the address of the adjacent NodeB through a home energy management system (HeMS).

6. A method for managing an establishment of X2 connection, **characterized by** comprising:
receiving, by An X2 gateway, an address sent by a home NodeB, wherein the address is an address of the adjacent NodeB corresponding to the home NodeB, and the address is used for establishing an X2 connection between the home NodeB and the adjacent NodeB; and
managing, by the X2 gateway, the establishment of the X2 connection according to the address.

7. The method according to claim 6, **characterized in that** receiving, by the X2 gateway, the address of the adjacent NodeB corresponding to the home NodeB comprises:
receiving, by the X2 gateway, the address through an X2 interface message.

8. The method according to claim 7, **characterized in that** the X2 interface message comprises one of the following:
an X2 establishment request message, a NodeB configuration update message, and an X2 interface message specific for sending the address.

9. The method according to claim 6, **characterized in that** managing, by the X2 gateway, the establishment of the X2 connection according to the address comprises:
the X2 gateway detecting whether a connection has been established with the adjacent NodeB, and managing the establishment of the X2 connection according to the detecting result and the address.

10. The method according to claim 9, **characterized in that** managing, by the X2 gateway, the establishment of the X2 connection according to the address comprises:
if the detecting result is that the X2 gateway has established the X2 connection with the adjacent NodeB, forbidding, by the X2 gateway, to request the adjacent NodeB for establishing the X2 connection; or
if the detecting result is that the X2 gateway has not yet established the X2 connection with the adjacent NodeB, determining, by the X2 gateway, to request the adjacent NodeB for establishing the X2 connection.

11. The method according to claim 10, **characterized in that** after forbidding, by the X2 gateway, to request the adjacent NodeB for establishing the X2 connection, the method further comprises:
when the X2 gateway receives the address through an X2 establishment request message, the X2 gateway sending a response message in response to the X2 establishment request message to the home NodeB, wherein the response message carries the following information: a NodeB identifier of the X2 gateway or a NodeB identifier of the adjacent NodeB, and X2 interface application layer configuration information of the adjacent NodeB; and
when the X2 gateway receives the address through a first NodeB configuration update message, sending, by the X2 gateway, to the home NodeB a second NodeB configuration update message or a NodeB configuration update acknowledge message corresponding to the first NodeB configuration update message, wherein the second NodeB configuration update message or the NodeB configuration update acknowledge message comprises: X2 interface application layer configuration information of the adjacent NodeB.

12. The method according to claim 10, **characterized in that** after the X2 gateway determines to request the adjacent NodeB for establishing the X2 connection, the method further comprises:
when the X2 gateway receives the address through the first X2 establishment request message, sending, by the X2 gateway, a response message in response to the first X2 establishment request message to the home NodeB, wherein the response message carries a NodeB identifier of the X2 gateway;
sending, by the X2 gateway, a second X2 establishment request message to the adjacent NodeB to request establishing a connection with the adjacent NodeB, wherein the second X2 establishment request message carries a NodeB identifier of the X2 gateway; and
after the X2 gateway establishes the X2 connection with the adjacent NodeB, sending, by the X2 gateway, a NodeB configuration update message to the home NodeB, wherein the NodeB configuration update message carries X2 interface application layer configuration information of the adjacent NodeB.

13. The method according to claim 10, **characterized in that** after the X2 gateway determines to request the adjacent NodeB for establishing the X2 connection, the method further comprises:
when the X2 gateway receives the address through an X2 establishment request message, sending, by the X2 gateway, an X2 establishment request message to the adjacent NodeB to request establishing a connection with the adjacent NodeB, wherein the X2 establishment request message carries a NodeB identifier of the X2 gateway; and
after the X2 gateway establishes an X2 connection with the adjacent NodeB, sending, by the X2 gateway, a response message in response to the X2 establishment request message to the home NodeB, wherein the response message carries the following information: a NodeB identifier of the X2 gateway or a NodeB identifier of the adjacent NodeB, and X2 interface application layer configuration information of the adjacent NodeB.

14. The method according to claim 10, **characterized in that** after the X2 gateway determines to request the adjacent NodeB for establishing the X2 connection, the method further comprises:
when the X2 gateway receives the address through a first NodeB configuration update message, the X2 gateway sending an X2 establishment request message to the adjacent NodeB to request establishing the X2 connection with the adjacent NodeB, wherein the X2 establishment request message carries a NodeB identifier of the X2 gateway; and
after the X2 gateway establishes the X2 connection with the adjacent NodeB, sending, by the X2 gateway, to the home NodeB a second NodeB configuration update message or a NodeB configuration update acknowledge message corresponding to the first NodeB configuration update message, wherein the second NodeB configuration update message or the NodeB configuration update acknowledge message carries X2 interface application layer configuration information of the adjacent NodeB.

15. The method according to any one of claims 11 to 14, **characterized in that** the X2 interface application layer configuration information comprises: information of a serving cell of in the adjacent NodeB, information of an adjacent cell of the serving cell, and information of MME Pool in connection with the adjacent NodeB.

16. The method according to any one of claims 6 to 14, **characterized in that** before the X2 gateway receives the address sent by the home NodeB, the method further comprises:
the home NodeB acquiring the address through a transport network layer address discovery procedure or a home energy management system (HeMS), and sending the acquired address to the X2 gateway.

17. A device for processing an establishment of X2 connection, which is provided on a home NodeB, **characterized in that** the device comprises:
an acquisition component configured to acquire an address of an adjacent NodeB corresponding to the home NodeB, wherein the address is used for establishing an X2 connection between the home NodeB and the adjacent NodeB; and
a sending component configured to send the acquired address to the X2 gateway.

18. The device according to claim 17, **characterized in that** the acquisition component is configured to acquire the address of the adjacent NodeB through a transport network layer address discovery procedure.

19. A device for managing an establishment of X2 connection, which is provided on an X2 gateway, **characterized in that** the device comprises:
a receiving component configured to receive an address sent by a home NodeB, wherein the address is an address of an adjacent NodeB corresponding to the home NodeB, and the address is used for establishing an X2 connection between the home NodeB and the adjacent NodeB; and
a management component configured to manage an establishment of the X2 connection according to the address.

20. The device according to claim 19, **characterized in that** the receiving component is configured to receive the address through an X2 interface message.

21. The device according to claim 20, **characterized in that** the receiving component is configured to receive the address through one of the following X2 interface messages: an X2 establishment request message, a NodeB configuration update message, and an X2 interface message specific for sending the address.

22. The device according to claim 19, **characterized in that** the management component comprises:
a detecting component configured to detect whether the X2 gateway has established a connection with the adjacent NodeB; and
a management component configured to manage the establishment of X2 connection according to the detecting result and the address.

23. The device according to claim 22, **characterized in that** the management component is configured to, if a detecting result is that the X2 gateway has established the X2 connection with the adjacent NodeB, forbid to request the adjacent NodeB for establishing the X2 connection; and if it is the detecting result is that the X2 gateway has not established the X2 connection with the adjacent NodeB, determine to request the adjacent NodeB for establishing the X2 connection.
